# EUROPEAN PATENT APPLICATION

(11) **EP 1 588 619 A2**
(43) Date of publication of application: **26.10.2005**
(21) Application number: 05252455.0
(22) Date of filing: 19.04.2005
(51) Int. Cl.: A21C 1/02, A21C 1/14, B01F 7/16, B01F 15/00, B01F 15/02

(54) **Mixing apparatus**

(30) Priority: 23.04.2004 US 831644
(71) Applicant: FMC Technologies, Inc., Chicago, IL 60601 (US)
(72) Inventor: Chandran, Jogesh B., Sandusky, Ohio 44870 (US)
(74) Representative: Hammler, Martin Franz

(57) **Abstract**

A mixing apparatus 10 for mixing a first ingredient with a second ingredient comprises a mixing tank 12 in which the first and second ingredients are mixed, a mixing unit 14 which mixes the first and second ingredients, a conveyor (126, Fig. 10) for conveying the first ingredient to the mixing tank, a supply assembly (18, Fig. 3) for conveying the second ingredient to the mixing tank, an outlet assembly 20 which is connectable to an outlet port in the mixing tank and which comprises an outlet conduit, and a viscosity sensor (232, Fig. 7) which is positioned in the outlet assembly between the outlet port and the outlet conduit.

## Description

### Background of the Invention

The present invention is directed to a mixing apparatus. More particularly, the invention is directed to a mixing apparatus which comprises a viscosity sensor that is positioned in an outlet conduit instead of in a separate viscosity sensing conduit.

Prior art mixing machines are used in a variety of industries to mix an array of different ingredients. In the food industry, for example, batter mixing machines are commonly used to blend a dry batter mix with water to produce a batter coating that is subsequently applied to a food product. Controlling the viscosity of the batter coating is important to achieving a predictable cooking time, cooking yield, final weight and total cost for the coated food product. One method of controlling the viscosity of the batter coating involves monitoring its viscosity and adjusting the mixing process to maintain the viscosity at a desired level.

Therefore, prior art batter mixing machines usually include a viscosity sensor for measuring the viscosity of the batter coating. The viscosity sensor is often positioned in a viscosity sensing conduit through which the batter coating is circulated. This viscosity sensing conduit is typically separate from the outlet conduit which conveys the batter coating to, for example, a batter applicator. Consequently, prior art batter mixing machines must usually also include a separate pump to circulate the batter coating through the viscosity sensing conduit. However, requiring a separate viscosity sensing conduit and an additional pump necessarily increases the cost and complexity of the machine.

### Summary of the Invention

In accordance with one aspect of the present invention, these and other disadvantages in the prior art are overcome by providing a mixing apparatus for mixing a first ingredient with a second ingredient which comprises a mixing tank in which the first and second ingredients are mixed, a viscosity sensor, and an outlet assembly through which the mixing apparatus is discharged, characterised in that the viscosity sensor is positioned in the outlet assembly.

In one embodiment of the invention, the mixing tank comprises a return port, the outlet assembly comprises a return conduit which is connectable between the return port and a portion of the outlet assembly located upstream of the outlet conduit, and the viscosity sensor is positioned upstream of at least one of the outlet conduit and the return port. Alternatively, the viscosity sensor may be positioned upstream of both the outlet conduit and the return port.

Since the viscosity sensor is positioned in the outlet assembly between the outlet port and the outlet conduit, the mixing apparatus does not need a separate viscosity sensing conduit in order to measure the viscosity of the mixed ingredients. Consequently, the mixing apparatus does not require a separate feed pump to convey the mixed ingredients through a separate viscosity sensing conduit. In addition, when the viscosity sensor is positioned upstream of both the outlet conduit and the return port, the viscosity of the mixed ingredients may be measured when the mixed ingredients are flowing through either the outlet conduit or the return conduit. Thus, the viscosity of the mixed ingredients can be measured at almost any time during the operation of the mixing apparatus.

These and other objects and advantages of the present invention will be made apparent from the following detailed description, with reference to the accompanying drawings.

### Brief Description of the Drawings

Figure 1 is a right rear perspective view of the mixing apparatus of the present invention;
Figure 2 is a left rear perspective view of the mixing apparatus shown in Figure 1;
Figure 3 is a front elevation view of the mixing apparatus shown in Figure 1;
Figure 4 is an isolated left rear perspective view of the frame component of the mixing apparatus shown in Figure 1;
Figure 5 is an isolated left rear perspective view of the mixing tank and outlet assembly components of the mixing apparatus shown in Figure 1;
Figure 6 is an isolated bottom perspective view of the mixing tank and outlet assembly components shown in Figure 5;
Figure 7 is an isolated left elevation view of the mixing tank and outlet assembly components shown in Figure 5;
Figure 8 is an isolated right rear perspective view of the mixing tank and mixing unit components of the mixing apparatus shown in Figure 1;
Figure 9 is an enlarged side elevation view of the mixing tank safety switch shown in Figure 8;
Figure 10 is an isolated right rear perspective view of the feed hopper and conveyor apparatus components of the mixing apparatus shown in Figure 1;
Figure 11 is an isolated left elevation view of the feed hopper and conveyor apparatus components shown in Figure 10;
Figure 12 is an enlarged top elevation view of a bearing assembly for the conveyor apparatus shown in Figure 10;
Figure 13 is an enlarged side elevation view of the front portion of the feed hopper shown in Figure 10; and
Figure 14 is a schematic representation of the control circuit for the mixing apparatus of the present invention.

### Detailed Description of the Preferred Embodiments

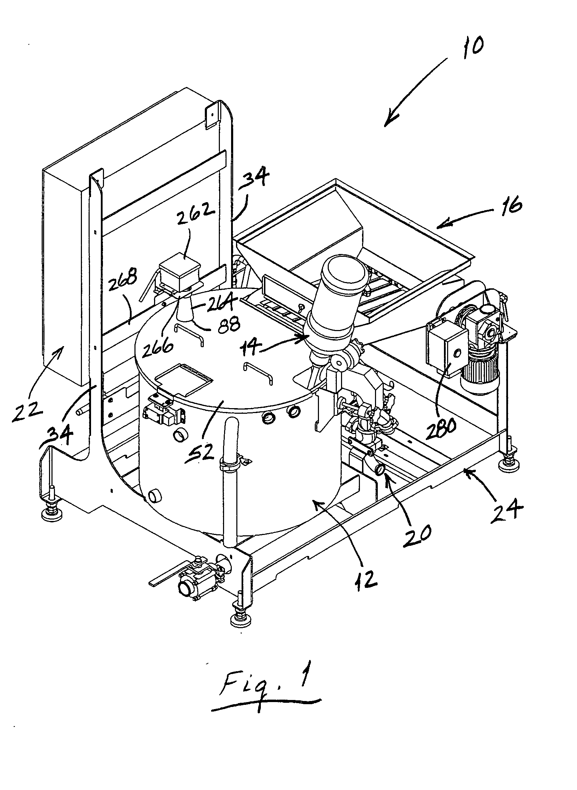

Referring to Figures 1 through 3, the mixing apparatus of the present invention, which is indicated generally by reference number 10, comprises a mixing tank 12 in which a first ingredient is mixed with a second ingredient, a mixing unit 14 which mixes the first and second ingredients, a feed hopper 16 which conveys the first ingredient to the mixing tank, a supply assembly 18 which conveys the second ingredient to the mixing tank, an outlet assembly 20 which transports the mixed ingredients to a separate apparatus (not shown), and a console 22 which houses a control circuit that controls the operation of the mixing apparatus. Although the mixing apparatus 10 may be employed to mix a variety of ingredients, for simplicity's sake it will be described herein in the context of a batter mixer, in which the first ingredient is a dry batter mix and the second ingredient is water.

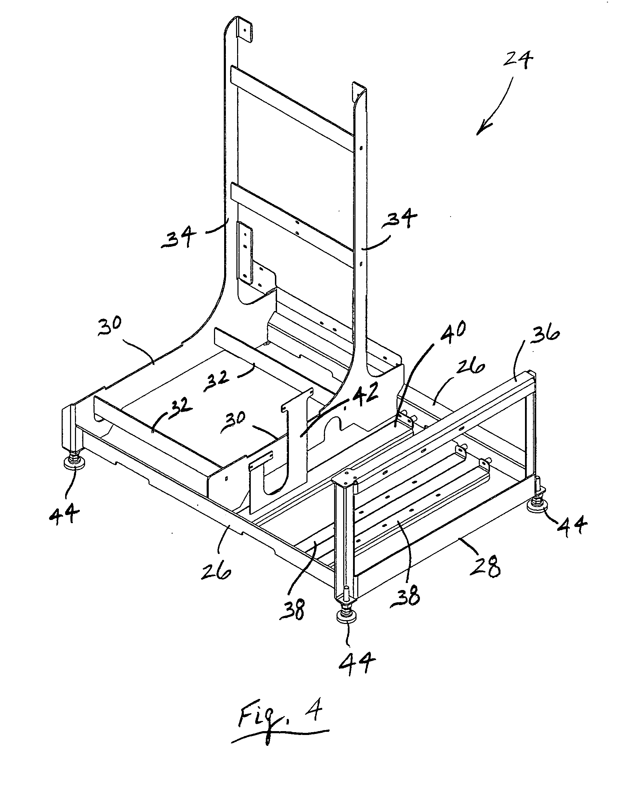

The components of the mixing apparatus 10 are preferably supported as a unitary assembly on a frame 24. Referring to Figure 4, the frame 24 includes a pair of generally parallel, spaced apart side beams 26 which are joined by an end beam 28 and a pair of cross beams 30. The cross beams 30 are connected by preferably two struts 32 to form a substantially horizontal support for the mixing tank 12. Also, each of the cross beams 30 ideally comprises part of a corresponding L-shaped frame element which includes an upstanding brace member 34 to which the console 22 is bolted. The frame 24 also comprises an upright support member 36 which is attached to the side beams 26 adjacent the end beam 28, a pair of first stretcher members 38 which are connected between the side beams, and a second stretcher member 40 which is connected between the side beams and to which a vertical bracket 42 is attached. In addition, the frame is preferably supported on a number of ideally adjustable feet 44.

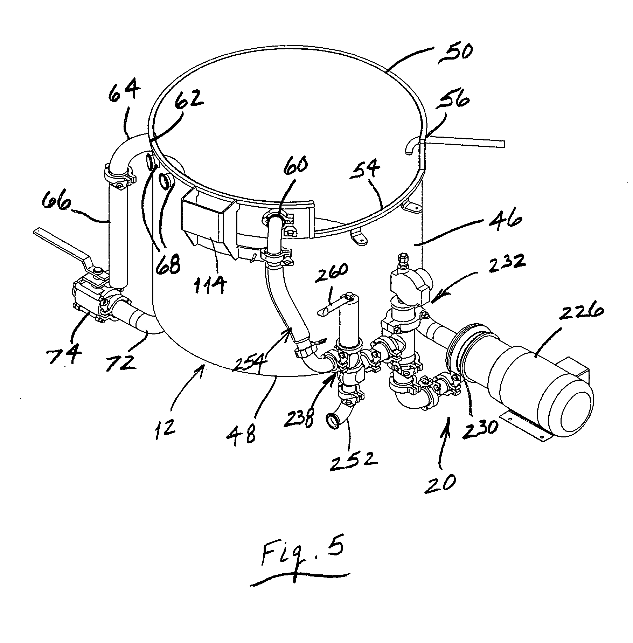

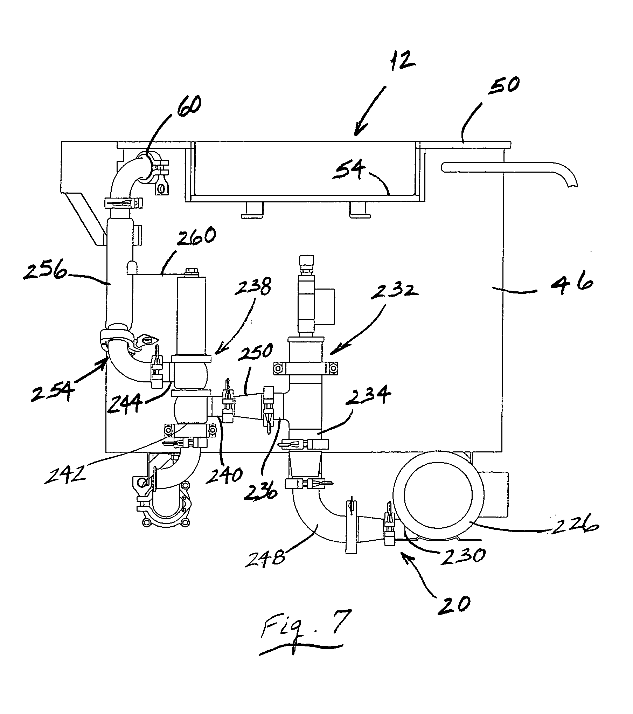

Referring to Figures 5 through 8, the mixing tank 12 comprises a preferably cylindrical body 46 which includes a bottom surface 48 and a top opening 50 that is covered by a removable lid 52. Both the body 46 and the lid 52 are ideally made of a durable, sanitary material, such as stainless steel. The body 46 includes a generally rectangular aperture 54 adjacent the top opening 50, an inlet port 56 which is connected to the supply assembly 18, an outlet port 58 in the bottom surface 48 which is connected to the outlet assembly 20, and a return port 60 proximate the top opening which is also connected to the outlet assembly. The body 46 may also include an overflow port 62 near the top opening 50 which is connected to an overflow pipe 64 that in turn is connected to a preferably flexible hose 66, a number of top ports 68 which may be connected to, e.g., respective batter applicators (not shown), and a maintenance port 70 in the bottom surface 48 which is connected to a clean-out pipe 72 that can be selectively opened and closed by suitable means, such as a valve 74.

In addition, the body 46 may comprise a double-walled portion which houses a heat exchanger that is connected between an inlet refrigeration port 76 and an outlet refrigeration port 78. The refrigeration ports 76, 78 may in turn be connected to an external refrigeration unit (not shown), which circulates a refrigerant through the heat exchanger to maintain the temperature of the batter mixture at a desired level.

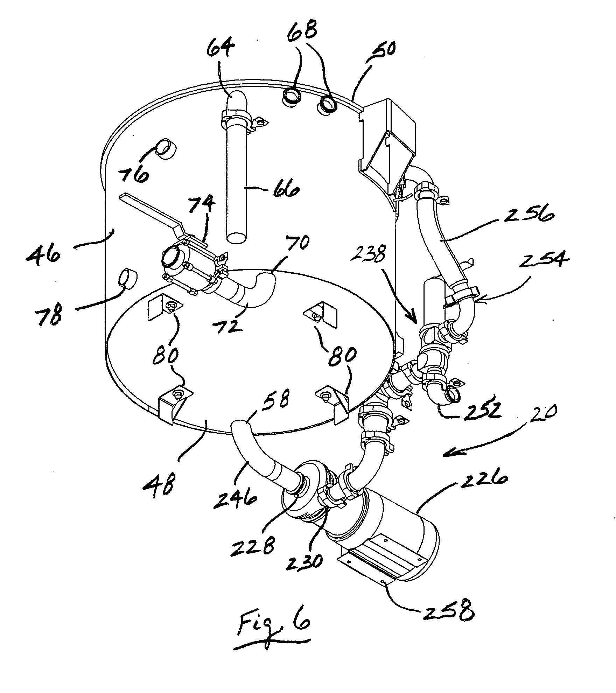

The mixing tank 12 is supported on the frame 24 in a generally upright position, with the bottom surface 48 resting on both the cross beams 30 and the struts 32. Although the weight of the mixing tank 12 may be sufficient to hold it in place relative to the frame 24, the mixing tank may include a number of brackets 80, which as shown in Figure 6 are bolted or otherwise connected to the bottom surface 48 in a rectangular pattern such that they will engage the cross beams 30 and the struts 32 and thereby prevent the mixing tank from moving relative to the frame.

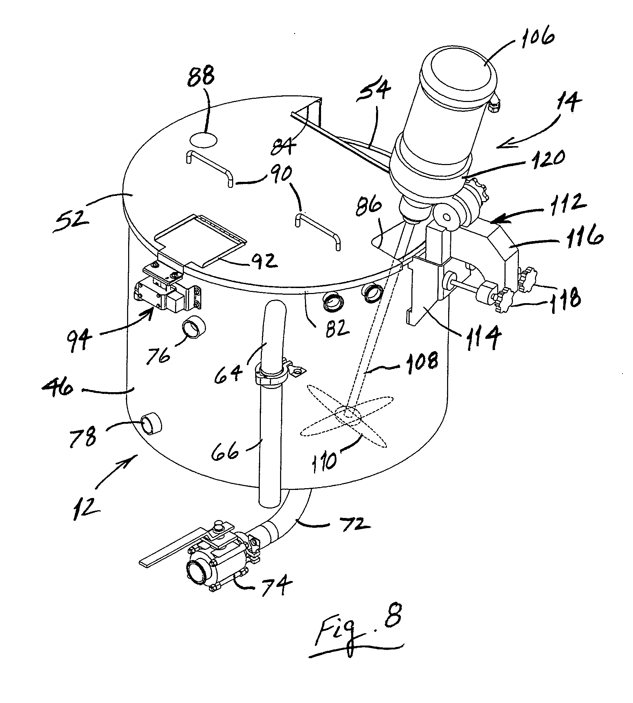

As best seen in Figure 8, the lid 52 comprises a circular rim 82 which is adapted to fit over the top opening 50, a generally rectangular opening 84 which aligns with the aperture 54 in the body 46, a slot 86 through which the mixing unit 14 extends, and preferably also a window 88 and a number of handles 90. The lid 52 may also include a switch plate 92 which is hinged or otherwise connected to the lid and which is adapted to engage a safety switch assembly 94 when the lid is mounted on the body 46.

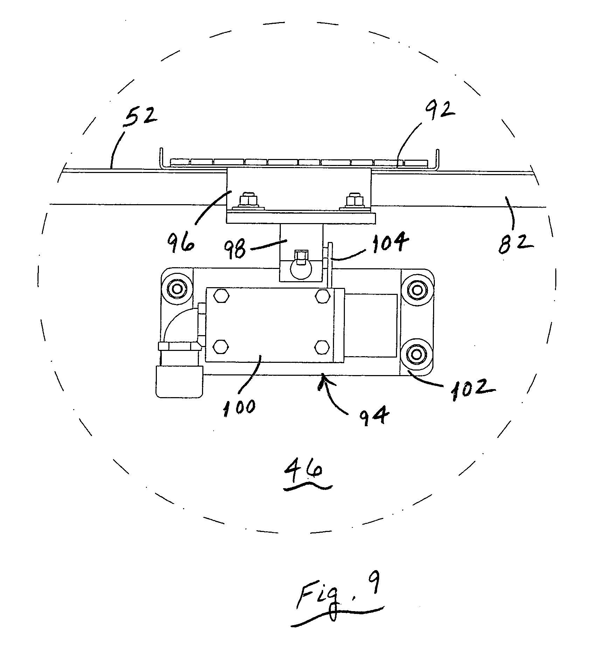

Referring to Figure 9, the switch plate 92 comprises a handle 96 which extends radially beyond the rim 82 of the lid 52, and a depressor 98 which is bolted to the handle. In addition, the safety switch assembly 94 includes a contact-type lid switch 100 which is electrically connected to the control circuit in the console 22. The lid switch 100 is secured to a mounting 102 which in turn is bolted to the body 46. The lid switch 100 includes a toggle 104 which is engaged by the depressor 98 when the lid 52 is properly positioned on the body 46 and the switch plate 92 is in the lowered position, which is the position shown in Figure 9. In this position of the toggle 104, the lid switch 100 sends a signal to the control circuit which permits the mixing apparatus 10 to operate normally. Conversely, when the lid 52 is removed or the switch plate 92 is in the raised position, the depressor 98 will not engage the toggle 104, the lid switch 100 will terminate its signal to the control circuit and certain components of the mixing apparatus 10 will cease operating. Of course, any suitable alternative device may be employed for interrupting the operation of the mixing apparatus 10 when the lid 52 is not properly positioned on the body 46. For example, the safety switch assembly 94 may include a non-contact proximity-type switch for the lid switch 100.

Referring again to Figure 8, the mixing unit 14 is shown to comprise a mixer motor 106, a shaft 108 which is connected to the mixer motor, and at least one propeller 110 which is connected to a distal end of the shaft. The mixing unit 14 can comprise any suitable mixing unit, such as the Model D direct drive portable mixer which is sold by MixMor of Los Angelas, California. The mixing unit 14 is connected to a motor mount 112 which is secured to a mounting bracket 114 that is welded to the body 46 of the mixing tank 12. The motor mount 112 includes a generally U-shaped yoke 116, a number of clamps 118 which removably secure the yoke to the mounting bracket 114, and a cradle 120 which is pivotably connected to the yoke. In the operative position of the mixing unit 14, which is shown in Figure 8, the mixer motor 106 is supported in the cradle 116 such that the shaft 108 extends through the slot 86 and into the mixing tank 12. In addition, the mixer motor 106 is ideally activated by a variable speed drive which is preferably located in the console 22 and is connected to the control circuit for the mixing apparatus 10.

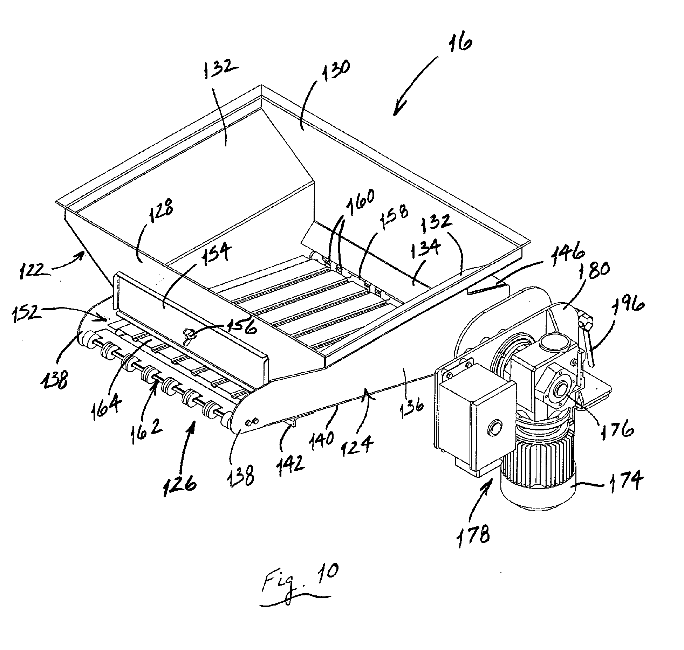

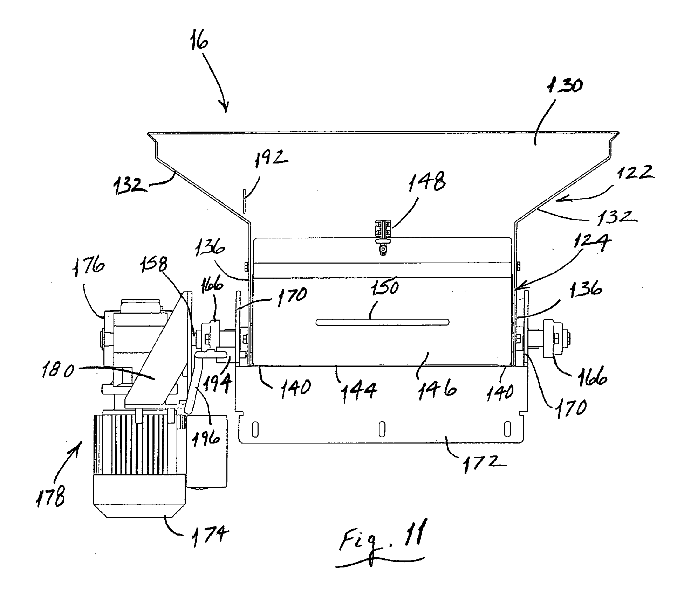

Referring now to Figures 10 and 11, the feed hopper 16 includes an upper bin portion 122 into which the dry batter mix is poured, a lower conveyor portion 124 which is preferably integral with and located directly beneath the bin portion, and a conveyor apparatus 126 which is disposed in the conveyor portion and which functions to transport the dry batter mix into the mixing tank 12. The bin portion 122 and the conveyor portion 124 are preferably constructed as a unit from a durable, sanitary material, such as stainless steel.

The bin portion 122 of the feed hopper 16 comprises a generally vertical front wall 128, a generally vertical rear wall 130, and a pair of inwardly sloping upper sidewalls 132 which are connected such as by welding to the front and rear walls 128, 130. In addition, the rear wall 130 may include an inwardly projecting lip 134 to help isolate certain components of the conveyor apparatus 126 from the dry batter mix.

The conveyor portion 124 of the feed hopper 16 comprises two generally vertical lower sidewalls 136, each of which is connected to or formed integrally with a corresponding upper sidewall 132. Each lower sidewall 136 includes a nose portion 138 that projects beyond the front wall 128 and a lower edge that is bent laterally inwardly to form an elongated rail 140. The conveyor portion further includes a cross bar 142 which is connected between the rails 140 proximate the nose portions 138 and a generally planar removable pan 144 that is slidably supported on the rails. The removable pan 144 is connected to or formed integrally with a rear panel 146 which is ideally configured to follow the contour of the rear portion of the lower sidewalls 136. In addition, the rear panel 146 is releasably secured to the rear wall 130 with, e.g., a hold down clamp 148 and is also optimally provided with a handle 150. Thus, by releasing the hold down clamp 148, both the rear panel 146 and the removable pan 144 may be removed to provide access to the conveyor apparatus 126.

The area of the feed hopper 16 which is bounded by the front wall 128, the lower sidewalls 136 and the removable pan 144 forms a generally rectangular opening 152 which, when the mixing apparatus 10 is assembled, communicates with the aperture 54 in the mixing tank 12.

The height of the opening 152 is established by a header plate 154 which extends between the lower sidewalls 136. The header plate 154 is preferably adjustably connected to the front wall 128 by, e.g., a wing nut 156 that is threaded onto a bolt which is welded to the front wall and which extends through a vertical slot in the header plate. Consequently, the height of the opening 152 may be adjusted by simply loosening the wing nut 156. In this manner, a desired rate for the flow of dry batter mix into the mixing tank 12 may be established by adjusting the height of the opening 152 depending on the speed of the conveyor apparatus 126.

The conveyor apparatus 126 can comprise any suitable conveyor which is capable of transporting the dry batter mix from the feed hopper 16 to the mixing tank 12. For example, the conveyor apparatus 126 may comprise the Flat-Flex® wire belt conveyor which is sold by the Wire Belt Company of America of Londonderry, New Hampshire. The conveyor apparatus 126 includes a drive shaft 158 which extends through the lower sidewalls 136 and on which are mounted a number of sprockets 160 that engage a continuous wire conveyor belt (not shown). The wire conveyor belt travels over a conventional nose roller assembly 162 which extends between and is connected to the nose portions 138 of the lower sidewalls 136. As shown in Figure 1, when the mixing apparatus 10 is assembled, the nose portions 138 extend through the aperture 54 to position the nose roller assembly 162 within the top of the mixing tank 12. Also, the top run of the wire conveyor belt is preferably supported on a fixed conveyor pan 164 which is secured such as by welding to the lower sidewalls 136.

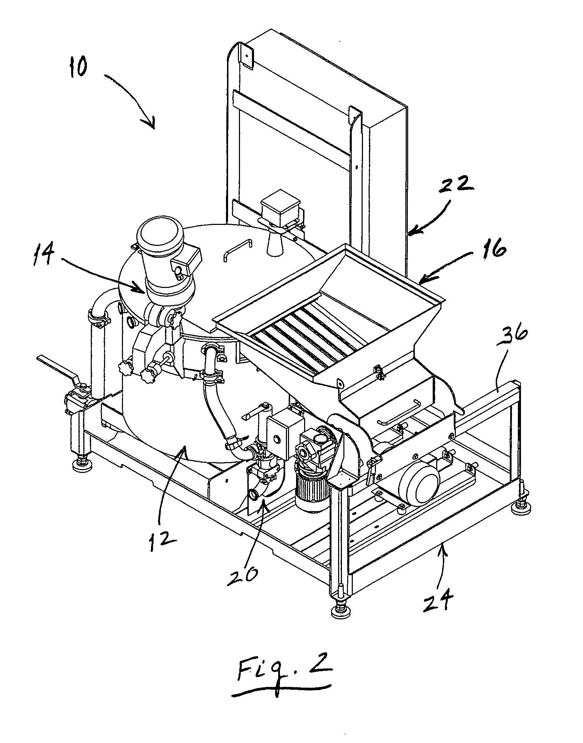

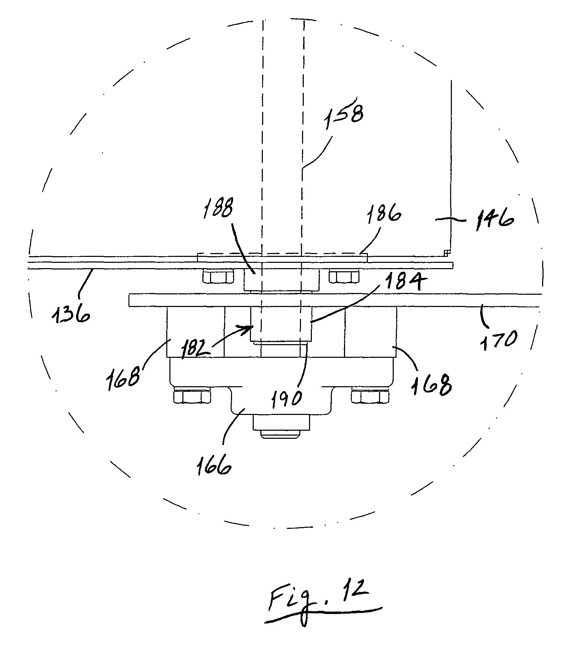

The drive shaft 158 is rotationally supported in a pair of flange mounted ball bearing assemblies 166. Referring also to Figure 12, each ball bearing assembly 166 is ideally bolted to, e.g., two bosses 168 which are attached to a mounting bracket 170. The mounting brackets 170 in turn are attached to a transverse connector plate 172 which, as shown in Figure 2, is secured to the upright support member 36 of the frame 24.

The drive shaft 158 is driven by a conveyor motor 174 through a gear box 176. The conveyor motor 174 and the gear box 176 may comprise a unitary drive assembly 178, such as the R-Series parallel gear motor which is sold by SEW-Eurodrive, Inc. of Troy, Ohio. The drive assembly 178 is activated by the control circuit which is located in the console 22. In addition, the drive assembly 178 is secured to the frame 24 via a motor mount 180 which is attached to the upright support member 36.

The rear portion of the feed hopper 16 is preferably pivotably supported on the frame 24 via a number of bearing devices which are mounted concentrically over the drive shaft 158. As shown in Figure 12, for example, each end of the drive shaft 158 ideally extends through a respective bearing device 182 which is secured to the lower sidewall 136 and which includes an outer diameter portion 184 that is rotatably received in a corresponding hole in the adjacent mounting bracket 170. More specifically, each bearing device 182 preferably includes a flange 186 which is bolted to the inside surface of the lower sidewall 136, a cylindrical spacer portion 188 which extends through a corresponding hole in the lower sidewall, the previously described outer diameter portion 184, and an inner sleeve member 190 which provides a low-friction seal between the drive shaft 158 and the bearing device. The bearing device 182 thus allows the feed hopper 16 to pivot about the drive shaft 158 relative to the frame 24.

Accordingly, the feed hopper 16 may be pivoted from its normal operating position to a vertical position to facilitate maintenance and cleaning of the mixing apparatus 10. In this regard, the mixing apparatus 10 ideally includes means for retaining the feed hopper 16 in its vertical position. Referring again to Figure 11, for example, the mixing apparatus 10 may comprise a padeye 192 which is welded or otherwise attached to the rear wall 130 of the feed hopper 16, and a pin assembly 194 which is connected to the mounting bracket 170 on a corresponding side of the feed hopper. The pin assembly 194 includes a pin which is connected to a handle 196. Thus, when the feed hopper 16 is raised to its vertical position, the operator will force the pin into a corresponding hole in the padeye 192 to secure the feed hopper to the mounting bracket 170. The operator may then return the feed hopper 16 to its normal operating position by retracting the pin.

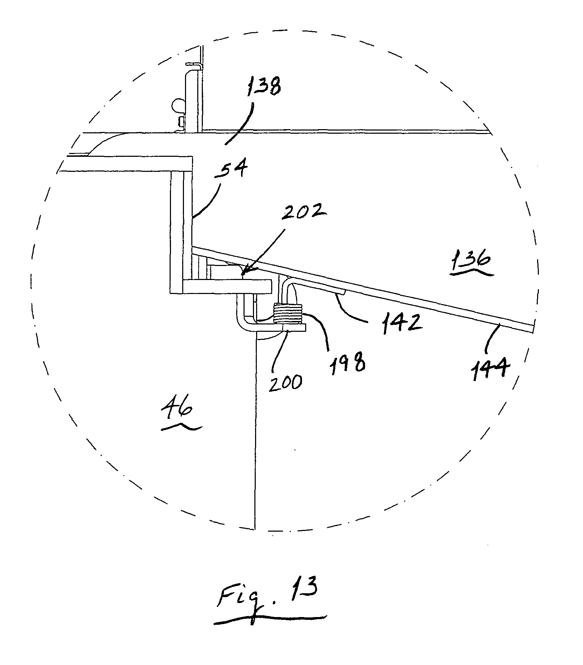

The front portion of the feed hopper 16 is preferably freely supported relative to the frame 24 on one or more suitable spring means. Referring to Figure 13, for example, the cross bar 142 of the feed hopper 16 ideally rests on preferably two compression-type springs 198, each of which is supported on a bracket 200 that is attached such as by welding to the body 46 of the mixing tank 12 beneath the aperture 54. The springs 198 are designed to have a combined spring rate such that they will expand a predetermined amount when the quantity of dry batter mix in the feed hopper 16 falls below a desired minimum level.

In addition, the mixing apparatus 10 preferably includes a hopper sensor 202 for detecting the movement of the front portion of the feed hopper 16 relative to a fixed portion of the mixing apparatus. For example, the hopper sensor 202 may comprise a proximity sensor, such as a conventional inductive-type proximity sensor, which is mounted to the mixing tank 12 adjacent the removable pan 144. The hopper sensor 202 is optimally connected to the control circuit in the console 22 and is ideally designed to generate an appropriate signal when the springs 198 push the feed hopper 16 away from the brackets 200 a predetermined distance. This signal is representative of the fact that the quantity of dry batter mix in the feed hopper 16 has fallen below the desired minimum level. In response to this signal, the control circuit preferably generates an appropriate audible or visual message to inform the operator that the quantity of dry batter mix in the feed hopper 16 has fallen below the desired minimum level.

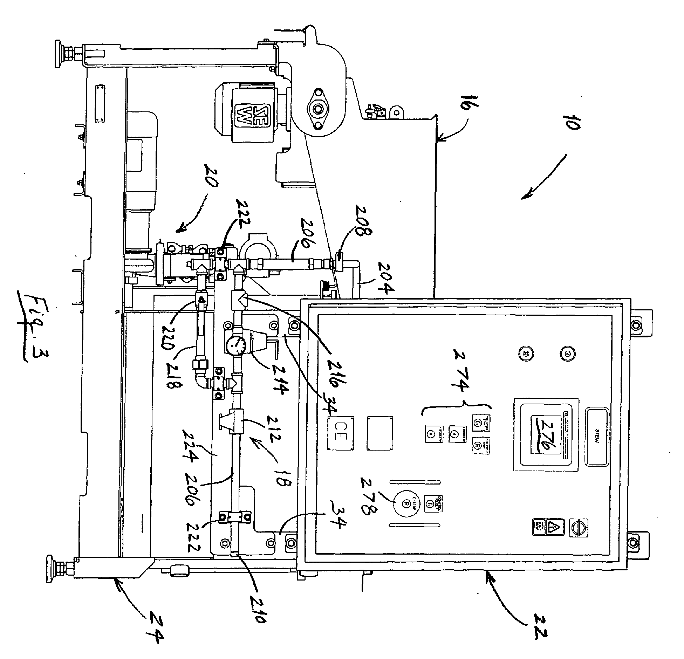

Referring again to Figure 3, the water supply assembly 18 is shown to comprise an inlet pipe 204 which extends through and is welded or otherwise secured in the inlet port 56 of the mixing tank 12, a main flowline 206 which is connected to the inlet pipe by, e.g., a sanitary clamp 208, and a coupling 210 by which the main flowline may be connected to a suitable source of water (not shown). The main flowline 206 preferably includes a filter unit 212 which filters the water prior to its entering the mixing tank 12, a regulator 214 by which the pressure of the water may be adjusted, and a water supply valve 216 which is ideally activated by the control circuit in the console 22. The water supply valve 216 may comprise any suitable electrically-operated valve, such as a conventional solenoid valve.

In addition, the supply assembly 18 ideally comprises a bypass flowline 218 which includes a first end that is connected to the main flowline 206 upstream of the regulator 214 and a second end that is connected to the main flowline downstream of the water supply valve 216. The bypass flowline 218, which comprises a suitable flow control valve 220, such as a manually-operated ball or plug valve, allows the operator to quickly fill the mixing tank 12 with water without being impeded by the regulator 214.

The main flowline 206 and the bypass flowline 218 can comprise any combination of suitable pipes and connectors. In addition, the components of the supply assembly 18 are optimally secured to the frame 24 by a number of clamps 222 which are connected to a support plate 224 that is attached to the brace members 34.

Referring once again to Figures 5 through 7, the outlet assembly 20 includes a feed pump 226 which comprises a pump inlet 228 and a pump outlet 230, a viscosity sensor 232 which comprises a sensor inlet 234 and a sensor outlet 236, and a flow control valve 238 which comprises a valve inlet 240, a first valve outlet 242 and preferably also a second valve outlet 244. The pump inlet 238 is connected to the outlet port 58 of the mixing tank 12 by a first conduit 246, the pump outlet 230 is connected to the sensor inlet 234 by a second conduit 248, and the sensor outlet 236 is connected to the valve inlet 240 by a third conduit 250. In addition, the first valve outlet 242 is connected to an outlet conduit 252 which in turn may be connected to a separate apparatus, such as a batter applicator (not shown), and the second valve outlet 244 is connected to the return port 60 of the mixing tank 12 by a return conduit 254. In the context of the present invention, the outlet conduit 252 can comprise any conduit or connector by which the mixing apparatus 10 may be connected to the separate apparatus.

The first, second and third conduits 246, 248 and 250, as well as the outlet conduit 252 and the return conduit 254, may comprise any combination of suitable pipes and fittings. In one embodiment of the invention, these pipes and fittings are constructed of a durable, sanitary material, such as stainless steel, and are connected together by conventional sanitary clamps to facilitate their breakdown for maintenance and cleaning. In addition, the return conduit 254 may include a length of relatively flexible tubing 256, such as a braided PVC tubing, to accommodate any misalignment between the second valve outlet 244 and the return port 60.

The feed pump 226 may comprise any pump which is capable of pumping a specified batter mixture at a desired rate. A suitable feed pump 226 may comprise, for example, the Model C114 centrifugal pump which is sold by Waukesha Cherry-Burrell of Delavan, Wisconsin. The feed pump 226 is preferably activated by the control circuit in the console 22 and is mounted to the frame 24 via a motor mount 258 which is connected to the first stretcher members 38.

The viscosity sensor 232 can comprise any suitable device which is capable of sensing the viscosity of the batter mix in the outlet assembly 20. In one embodiment of the invention, the viscosity sensor 232 comprises a continuous flow viscosity sensor, that is, one which is capable of sensing the viscosity of the batter mix "on the fly" as it flows through the outlet assembly 20. In a more preferred embodiment of the invention, the viscosity sensor 232 comprises a vibratory-type sensor which includes a vibrating sensing element that is contacted by the batter mix flowing through the outlet assembly 20.

Such a viscosity sensor 232 can comprise, for example, the AST-100® Viscometer which is sold by Brookfield Engineering Laboratories of Middleboro, Massachusetts. This viscosity sensor 232 includes a control system which is preferably housed in the console 22 and is connected to the control circuit for the mixing apparatus 10. The viscosity sensor 232 supplies the control circuit with a signal which is representative of the viscosity of the batter mix that is flowing through the outlet assembly 20, which is generally the same as the viscosity of the batter mix in the mixing tank 12. Also, the viscosity sensor 232 may include a temperature sensor for detecting the temperature of the batter mix as it flows through the outlet assembly 20.

The flow control valve 238 may comprise any suitable valve or combination of valves which is capable of selectively directing the flow of batter mix from the third conduit 250 to either the outlet conduit 252 or the return conduit 254. In one embodiment of the invention, the flow control valve 238 comprises a three-way diverter valve which is designed to selectively connect the valve inlet 240 with either the first valve outlet 242 or the second valve outlet 244. The flow control valve 238 includes a closure member which is movable between a first position in which the valve inlet 240 is connected to the first valve outlet 242, a second position in which the valve inlet is connected to the second valve outlet 244, and preferably also a third position in which the valve inlet is isolated from both the first valve outlet and the second valve outlet. The closure member may be moved manually via a handle 260 or, alternatively, via a solenoid which is activated by the control circuit in the console 22. Thus, the flow control valve 238 allows the batter mix to be pumped from the mixing tank 12 to either the outlet conduit 252 or back into the mixing tank via the return conduit 254. Of course, the flow control valve 238 could be replaced with, for example, two separate valves, one of which is positioned between the third conduit 250 and the outlet conduit 252 and the other of which is positioned between the third conduit and the return conduit 254.

Furthermore, since the viscosity sensor 232 is positioned upstream of the flow control valve 238, it can sense the viscosity of the batter mix whether the batter mix is pumped through the outlet conduit 252 or the return conduit 254. Thus, as long as the batter mix is flowing through any portion of the outlet assembly 20, the viscosity sensor 232 can determine the viscosity of the batter mix. Consequently, the mixing apparatus 10 eliminates the need to divert the batter mix through a separate viscosity sensing conduit in order to check the viscosity of the batter mix.

Referring again to Figure 1, the mixing apparatus 10 preferably also comprises a level sensor 262 for detecting the level of the batter mix in the mixing tank 12. The level sensor 262 is ideally connected to the control circuit in the console 22 and is optimally capable of measuring not only a desired minimum level of batter mix, but also a desired maximum level of batter mix. Also, the level sensor 262 is preferably adjustable so that the desired minimum and maximum levels may be changed by the operator depending on the requirements of a particular mixing process. Accordingly, a suitable level sensor 262 may comprise the QT50U ultrasonic level sensor which is sold by Banner Engineering Corporation of Minneapolis, Minnesota.

The level sensor 262 is preferably shielded from ambient light by a shroud 264 which is positioned over the window 88 in the lid 52. In addition, the level sensor 262 is ideally movably supported on a bracket 266 which in turn is secured to the frame 24 via a cross bar 268 that is connected between the upstanding brace members 34.

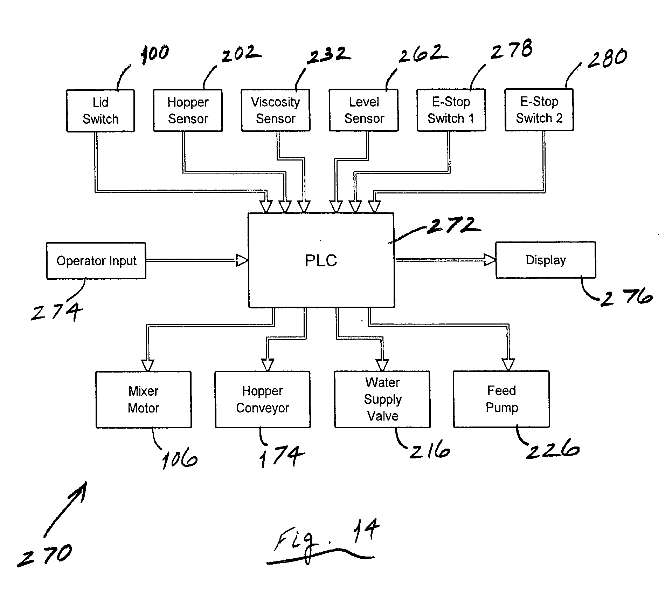

Referring now to Figure 14, the control circuit for the mixing apparatus 10, which is indicated generally by reference number 270, includes a suitable controller 272 for controlling the operation of the mixing apparatus in accordance with a set of preprogrammed instructions that are stored in an associated memory. The controller 272 ideally comprises a programmable logic controller ("PLC"), such as the MicroLogix™ 1200 controller which is sold by the Allen-Bradley division of Rockwell Automation of Milwaukee, Wisconsin.

The controller 272 ideally receives input signals from the lid switch 100, the hopper sensor 202, the viscosity sensor 232 and the level sensor 262. Based on these signals, the controller 272 selectively activates the mixer motor 106, the conveyor motor 174, the water supply valve 216 and the feed pump 226. The controller 272 may also receive certain information from the operator via an input device 274 and communicate specific information to the operator via a display unit 276. For example, the operator may input a desired viscosity for the batter mix using the input device 274, which as shown in Figure 3 may include a combination of touch buttons, and the controller may display this desired viscosity to the operator via the display unit 276. In one embodiment of the invention, the display unit 276 also includes a touch screen feature to allow the operator to communicate with the controller 272. A suitable such display unit may comprise the PanelView Plus 600™ operator interface device which is sold by the Allen-Bradley division of Rockwell Automation of Milwaukee, Wisconsin.

The controller 272 preferably controls the operation of the mixer motor 106 in response to the signal from the viscosity sensor 232, which as mentioned above is representative of the measured viscosity of the batter mix in the mixing tank 12. In particular, the controller 272 controls the speed of the mixer motor 106 by sending an appropriate mixer control signal to the variable speed drive which powers the mixer motor. The controller 272 determines the appropriate mixer control signal by, for example, accessing a look-up table which lists the preferred mixer motor speed for each of a number of measured viscosity ranges. For example, if the measured viscosity is between 0 and 100 centistokes, the preferred mixer motor speed may be 400 rpm; if the measured viscosity is between 100 and 200 centistokes, the preferred mixer motor speed may be 550 rpm; and if the measured viscosity is between 200 and 300 centistokes, the preferred mixer motor speed may 700 rpm. The preferred mixer motor speeds may be determined empirically for each of a number of batter viscosities. Thus, at predetermined intervals during the operation of the mixing apparatus 10, the controller 272 will sample the signal from the viscosity sensor 232 and, based on this signal, will determine a preferred mixer motor speed. The controller 272 will then send a corresponding mixer control signal to the variable speed drive, which will drive the mixer motor 106 at that speed.

The controller 272 ideally controls the operation of the conveyor motor 174 and the water supply valve 216 in accordance with a Proportional-Integral-Derivative ("PID") control scheme which depends on the difference between the desired and measured viscosities of the batter mix. The desired viscosity is a process set point which the operator communicates to the controller 272 via the input device 274. The difference between the desired viscosity and the measured viscosity defines a viscosity offset value which the controller 272 uses to control the operation of the conveyor motor 174 and the water supply valve 216. For example, if the measured viscosity is lower than the desired viscosity, the controller 272 will activate the conveyor motor 174 for a length of time which is proportional to the viscosity offset value to add more dry batter mix to the mixing tank 12. Similarly, if the measured viscosity is higher than the desired viscosity, the controller will open the water supply valve 216 for a length of time which is proportional to the viscosity offset value to add more water to the mixing tank 12.

In operation of the mixing apparatus 10, the viscosity sensor 232 will continually sense the viscosity of the batter mix and generate a signal which is representative of this measured viscosity. Periodically, for example every ten to fifteen seconds, the controller 272 will sample the signal from the viscosity sensor 232 and calculate the viscosity offset value. Depending on the sign of the viscosity offset value, the controller 272 will then activate either the conveyor motor 174 or the water supply valve 216 for a length of time which is proportional to the magnitude of the viscosity offset value. Simultaneously, the controller 272 will adjust the speed of the mixer motor depending on the measured viscosity, as discussed above.

The controller 272 preferably also samples the signal from the level sensor 262 periodically in order to monitor the level of batter mix in the mixing tank 12. Based on this signal, if the controller 272 determines that the level of batter mix has fallen below a desired minimum level, the controller will activate the conveyor motor 174 and open the water supply valve 216 in order to refill the mixing tank 12. The controller 272 will then deactivate the conveyor motor 174 and close the water supply valve 216 when the signal from the level sensor 262 indicates that the level of batter mix has reached a desired maximum level.

The desired minimum and maximum levels of batter mix in the mixing tank 12 may be entered into the controller 272 by the operator using the input device 274. Alternatively, these levels may be programmed directly into the level sensor 262. In addition, the operator may change the desired minimum and maximum levels depending on the requirements of a particular mixing process. Thus, the mixing apparatus 10 is capable of processing any desired amount of batter mix in a single batch.

The controller 272 may also control certain other aspects of the mixing apparatus 10 based on signals from the lid switch 100 and the hopper sensor 202. For example, if the signal from the lid switch 100 to the controller 272 is interrupted, which is indicative of the fact that either the switch plate 92 has been raised or the lid 52 removed, the controller may deactivate either the mixer motor 106, the conveyor motor 174, the water supply valve 216, or the feed pump 226, or any combination of these devices. In addition, if the signal from the hopper sensor 202 to the controller 272 is interrupted, which is indicative of the fact that the amount of dry batter mix in the feed hopper 16 has fallen below a desired minimum level, the controller 272 may generate a message which prompts the operator to refill the feed hopper or, alternatively, deactivate the conveyor motor 174 and/or the feed pump 226.

The mixing apparatus 10 may also be provided with a number of emergency stop switches which when actuated will deactivate the mixer motor 106, the conveyor motor 174, the water supply valve 216, and the feed pump 226. For example, a first emergency stop switch 278 may be located at the front of the mixing apparatus 10 on the console 22. Also, as shown in Figure 1, a second emergency stop switch may be located at the rear of the mixing apparatus next to, for example, the conveyor motor 174.

It should be recognized that, while the present invention has been described in relation to the preferred embodiments thereof, those skilled in the art may develop a wide variation of structural and operational details within the scope of the invention as defined in the claims.

## Claims

1. A mixing apparatus (10) for mixing at least a first ingredient with at least a second ingredient, the mixing apparatus comprising:
a mixing tank (12) in which the first and second ingredients are mixed;
a viscosity sensor (232), and
an outlet assembly (20) through which the mixing apparatus is discharged;
**characterised in that** the viscosity sensor is positioned in the outlet assembly.

2. The mixing apparatus (10) of claim 1, in which the viscosity sensor (232) includes an inlet (234) that communicates with an outlet port (58) in the mixing tank (12) and an outlet (236) that communicates with a separate apparatus.

3. The mixing apparatus (10) of claim 1 or 2, in which the outlet assembly (20) is connectable to an outlet port (58) in the mixing tank (12) and comprises an outlet conduit (252); the viscosity sensor (232) being positioned between the outlet port and the outlet conduit.

4. A mixing apparatus (10) for mixing at least a first ingredient with at least a second ingredient, the mixing apparatus comprising:
a mixing tank (12) in which the first and second ingredients are mixed;
a mixing unit (14) which mixes the first and second ingredients and which comprises a mixer motor (106); and
a viscosity sensor (232) which is positioned in fluid communication with the mixed ingredients; **characterised in that** the mixing apparatus further comprises a controller (272) for controlling the speed of the mixer motor depending on a viscosity signal which is generated by the viscosity sensor.

5. A mixing apparatus (10) for mixing at least a first ingredient with at least a second ingredient, the mixing apparatus comprising:
a mixing tank (12) in which the first and second ingredients are mixed;
a conveyor (126) for conveying the first ingredient to the mixing tank;
an arrangement (18) for supplying the second ingredient to the mixing tank; and
a viscosity sensor (232) which is positioned in fluid communication with the mixed ingredients; **characterised in that** the mixing apparatus further comprises a controller (272) for controlling the operation of at least one of the conveyor and second ingredient supplying arrangement in response to a difference between a measured viscosity of the mixed ingredients and a desired viscosity of the mixed ingredients.

6. The mixing apparatus (10) of claim 5, wherein the controller (272) activates the at least one of the conveyor (126) and second ingredient supplying arrangement (18) for a length of time which is proportional to the difference between the measured and desired viscosities.

7. A mixing apparatus (10) for mixing at least a first ingredient with at least a second ingredient, the mixing apparatus comprising:
a mixing tank (12) in which the first and second ingredients are mixed;
a conveyor (126) for conveying the first ingredient to the mixing tank; and
an arrangement (18) for supplying the second ingredient to the mixing tank; **characterised in that** the mixing apparatus further comprises:
a detector (262) for detecting a level of the first and second ingredients in the mixing tank; and
a controller (272) which is responsive to the detector for controlling the operation of the conveyor and second ingredient supply arrangement depending on desired minimum and maximum levels of the first and second ingredients in the mixing tank;
and wherein at least the desired maximum level may be changed by the operator.

8. The mixing apparatus (10) of claim 7, wherein the detector (262) comprises an ultrasonic level sensor.

9. The mixing apparatus (10) of claim 7 or 8, wherein the controller (272) activates the conveyor (126) and second ingredient supply arrangement (18) when the detector (262) detects the desired minimum level and deactivates the conveyor and second ingredient supply arrangement when the detector detects the desired maximum level.

10. The mixing apparatus (10) of any of claims 7-9, comprising a viscosity sensor (232).

11. The mixing apparatus (10) of any of claims 4 - 6 or 10, further comprising:
an outlet assembly (20) which is connectable to an outlet port (58) in the mixing tank (12) and which comprises an outlet conduit (252);
wherein the viscosity sensor (232) is positioned in the outlet assembly between the outlet port and the outlet conduit.

12. The mixing apparatus (10) of claim 3 or 11, wherein the mixing tank comprises a return port (60) and the outlet assembly comprises a return conduit (254) which is connectable between the return port and a portion of the outlet assembly (20) located upstream of the outlet conduit (252).

13. The mixing apparatus (10) of claim 12, wherein the viscosity sensor (232) is positioned upstream of both the outlet conduit (252) and the return conduit (254).

14. The mixing apparatus (10) of claim 12 or 13, further comprising at least one flow control valve (238) for controlling the flow of the mixed ingredients through at least one of the outlet conduit (252) and the return conduit (254).

15. The mixing apparatus (10) of claim 14, wherein the flow control valve (238) comprises a valve inlet (240) which communicates with the viscosity sensor (232), a first valve outlet (242) which communicates with the outlet conduit (252), and a second valve outlet (244) which communicates with the return conduit (254).

16. The mixing apparatus (10) of claim 15, wherein the flow control valve (238) comprises a three-way diverter valve.

17. The mixing apparatus (10) of any of claims 12 - 16, further comprising:
a pump (226) which is positioned in the outlet assembly (20) between the outlet port (58) and the return conduit (254);
wherein the pump conveys the mixed ingredients through both the outlet conduit (252) and the return conduit.

18. The mixing apparatus (10) of any of claims 1 - 6 or 10 -17, wherein the viscosity sensor (232) comprises a continuous flow viscosity sensor.

19. The mixing apparatus (10) of claim 18, wherein the viscosity sensor (232) comprises a vibratory-type viscosity sensor.

20. The mixing apparatus (10) of any of claims 1 - 3 or 5 - 19, further comprising:
a mixing unit (14) which mixes the first and second ingredients and which comprises a mixer motor (106); and
a controller (272) for controlling the speed of the mixer motor depending on a viscosity signal which is generated by the viscosity sensor (232).

21. The mixing apparatus (10) of claim 4 or 20, wherein the controller (272) comprises a PLC which is connected to the viscosity sensor (232).

22. The mixing apparatus (10) of claim 21, wherein the controller (272) further comprises a variable speed drive which is connected to the motor (106) and is controlled by the PLC.

23. The mixing apparatus (10) of any of claims 4 or 20 - 22, wherein the controller (272) comprises a look-up table comprising a preferred mixer motor speed for each of a number of viscosity ranges.

24. The mixing apparatus (10) of any of claims 1-4 or 7 - 23, further comprising a conveyor (126) for conveying the first ingredient to the mixing tank (12).

25. The mixing apparatus (10) of claim 5, 6 or 24, wherein the conveyor (126) is driven by a conveyor motor (174).

26. The mixing apparatus (10) of claim 25, further comprising a controller (272) for controlling the operation of the conveyor motor (174) depending on a viscosity signal which is generated by the viscosity sensor (232).

27. The mixing apparatus (10) of claim 25, wherein the controller (272) comprises a PLC which is connected to the viscosity sensor (232).

28. The mixing apparatus (10) of claim 27, wherein the PLC activates the conveyor motor (174) for a length of time which is proportional to a difference between a measured viscosity that is represented by the viscosity signal and a desired viscosity.

29. The mixing apparatus (10) of any of claims 25 - 28, further comprising a feed hopper (16) which communicates the first ingredient to the conveyor (126) and which includes a first end portion that is pivotably supported about a drive shaft (158) of the first conveyor (126), and a second end portion (142) that is freely supported relative to a fixed portion (12) of the mixing apparatus.

30. The mixing apparatus (10) of claim 29, further comprising:
at least one spring member (198) which is positioned between the second end portion and the fixed portion (12) and which is designed to expand a predetermined amount when the quantity of the first ingredient in the feed hopper (16) falls below a desired minimum level; and
a detector (202) for detecting the movement of the second end portion relative to the fixed portion;
wherein the detector will generate a signal when the spring member moves the second end portion away from the fixed portion a predetermined distance.

31. The mixing apparatus (10) of claim 30, further comprising means responsive to the signal for generating a perceptible message which is indicative of the fact that the quantity of the first ingredient in the feed hopper (16) has fallen below the desired minimum level.

32. The mixing apparatus (10) of claim 30 or 31, wherein the detector (202) comprises a proximity sensor.

33. The mixing apparatus (10) of claim 32, wherein the detector (202) comprises an inductive-type proximity sensor.

34. The mixing apparatus (10) of any of claims 30 - 33, wherein the at least one spring member comprises a compression spring.

35. The mixing apparatus (10) of any of claims 30 - 33, wherein the at least one spring member (198) comprises two compression springs, each of which is positioned between the second end portion and the fixed portion (12).

36. The mixing apparatus (10) of any of claims 29 - 35, wherein the fixed portion (12) comprises the mixing tank.

37. The mixing apparatus (10) of any of claims 1 - 4 or 7 - 36, further comprising an arrangement (18) for supplying the second ingredient to the mixing tank (12).

38. The mixing apparatus (10) of claim 5, 6 or 37, wherein the second ingredient supplying arrangement (18) comprises a fluid conduit which includes an electrically-operated valve (238) for controlling the flow of the second ingredient into the mixing tank.

39. The mixing apparatus (10) of claim 38, further comprising a controller (272) for controlling the operation of the valve (238) depending on a viscosity signal which is generated by the viscosity sensor (232).

40. The mixing apparatus (10) of claim 39, wherein the controller (272) comprises a PLC which is connected to the viscosity sensor (232).

41. The mixing apparatus (10) of claim 40, wherein the PLC opens the valve (238) for a length of time which is proportional to a difference between a measured viscosity that is represented by the viscosity signal and a desired viscosity.
